# EUROPÄISCHE PATENTSCHRIFT

(11) **EP 3 325 937 B1**
(45) Veröffentlichungstag und Bekanntmachung des Hinweises auf die Patenterteilung: **01.09.2021**
(21) Anmeldenummer: 16741030.7
(22) Anmeldetag: 20.07.2016
(51) Int. Cl.: G01M 17/007, G01M 13/02, G01M 15/02

(54) **PRÜFVORRICHTUNG SOWIE PRÜFSTAND MIT EINER DERARTIGEN PRÜFVORRICHTUNG**
TEST DEVICE AND TEST STAND HAVING A TEST DEVICE OF THIS TYPE
DISPOSITIF D'ESSAI ET BANC D'ESSAI COMPRENANT UN DISPOSITIF D'ESSAI DE CE TYPE

(30) Priorität: 20.07.2015 AT 4792015
(43) Veröffentlichungstag der Anmeldung: 30.05.2018
(73) Patentinhaber: AVL List GmbH, 8020 Graz (AT)
(72) Erfinder: MESSNER, Ulrich, 8020 Graz (AT)
(74) Vertreter: Hahner, Ralph
(86) Internationale Anmeldenummer: PCT/EP2016/067296
(87) Internationale Veröffentlichungsnummer: WO 2017/013173

(56) Entgegenhaltungen:
- EP-A2- 1 285 783
- EP-A2- 1 596 179
- EP-A2- 1 760 446
- AT-U1- 13 274
- DE-A1- 3 303 588
- US-A- 6 044 696

## Beschreibung

Die Erfindung betrifft eine Prüfvorrichtung für einen Prüfstand für Kraftfahrzeuge. Ferner betrifft die Erfindung einen Prüfstand mit einer derartigen Prüfvorrichtung.

Mit einem Prüfstand der eingangs genannten Art können Versuche an Kraftfahrzeugen durchgeführt werden, um so Rückschlüsse auf das Fahrzeugverhalten, den Durchschnittsverbrauch, die Fahrwerkseinstellung, die Bremsanlage und/oder den Antriebsstrang des Kraftfahrzeugs ziehen zu können. Hierzu simuliert der Prüfstand Belastungen auf das zu prüfenden Kraftfahrzeug, die den im realen Fahrbetrieb auftreten Belastungen entsprechen. Dadurch lassen sich zeit- und kostenintensive reale Fahrversuche reduzieren. Ein weiterer Vorteil eines Prüfstandes ist, dass sich die Belastungen exakt reproduzieren lassen.

Herkömmliche Prüfstände umfassen eine oder mehrere Prüfvorrichtungen in Form von sogenannten Dynamometern, die auch als Lasteinrichtungen bezeichnet werden können. Eine derartige Lasteinrichtung weist eine Welle auf, die an eine Nabe eines zu prüfenden Kraftfahrzeugs angeschlossen wird. Zur Durchführung der Fahrversuche bringen die Lasteinrichtungen dann ein Antriebs- und/oder ein Belastungsmoment über die Welle auf die Nabe auf.

Zur Kopplung der Naben mit den Prüfvorrichtungen ist es bekannt, die Kraftfahrzeuge auf einem fahrbaren Untersatz in den Prüfstand zu fahren und in eine Prüfposition zu bringen, in welcher die Naben mit den Wellen verbunden werden können. Dabei wäre eine direkte Verbindung der Wellen mit den Naben des Kraftfahrzeugs grundsätzlich möglich. Da die Fahrzeugnaben jedoch unterschiedliche Lochbilder (4 oder 5 Löcher) aufweisen, wird im Allgemeinen eine Adaptervorrichtung zur Ankopplung der Nabe an die Welle der Lasteinrichtung verwendet. Hierzu ist es bekannt, die Adaptervorrichtungen vor dem Einbringen des Kraftfahrzeugs in den Prüfstand an den Naben des Kraftfahrzeugs zu montieren. Die Adaptervorrichtungen werden dabei durch Böcke auf dem fahrbaren Untersatz abgestützt, so dass das Kraftfahrzeug vollständig im fahrbaren Untersatz montiert und vorbereitet werden kann, bevor dieses in den Prüfstand gefahren wird.

Eine derartige Adaptervorrichtung geht aus der DE 20 2010 006 682 U1 hervor. Die Adaptervorrichtung dient zum Ankoppeln eines Nutzfahrzeugs an einen Prüfstand, wobei die Adaptervorrichtung zwischen einer Nabe, einer Antriebswelle des Nutzfahrzeugs und einer zum Prüfstand gehörenden und zu einer Lasteinrichtung des Prüfstands führenden Verbindungswelle einsetzbar ist, um die Nabe und die Verbindungswelle miteinander zu koppeln. An der Adaptervorrichtung ist eine Rollvorrichtung vorgesehen, auf der die Adaptervorrichtung in einem Zustand abstützbar ist, in dem die Adaptervorrichtung mit der Nabe des Lastkraftwagens verbunden ist, um ein Bewegen bzw. Verfahren des Nutzfahrzeugs zusammen mit der Adaptervorrichtung auf dem Boden zu ermöglichen. Die Adaptervorrichtung und die Rollvorrichtung werden außerhalb des Prüfstands an dem Nutzfahrzeug angebracht und im Anschluss daran wird das Nutzfahrzeug samt Adaptervorrichtung mittels der Rollvorrichtung in den Prüfstand gefahren und mit der Verbindungswelle gekoppelt. Danach wird die Rollvorrichtung von der Adaptervorrichtung entfernt, wenn die Adaptervorrichtung zusammen mit dem Nutzfahrzeug in dem Prüfstand in der bestimmungsgemäßen Weise eingebaut ist. Nachteilig hierbei ist, dass das Montieren der Adaptervorrichtungen an dem Nutzfahrzeug und das anschließende Koppeln der Adaptervorrichtungen mit den Wellen der Lasteinrichtungen äußerst zeit- und kostenintensiv sind. Folglich ist die Produktivität eines derartigen Prüfstandes aufgrund der langen Rüstzeiten eingeschränkt. Zudem ergeben sich durch die langen Rüstzeiten hohe Betriebskosten.

Des Weiteren ist aus der DE 10 2004 023 730 A1 ein Fahrzeugprüfstand bekannt, der am Ende des Montagebands bei Automobilherstellern, d.h. "end of line" eingesetzt wird. Der Prüfstand weist vier verfahrbare Tragplatten auf, auf denen jeweils ein Elektromotor zum Aufbringen einer rotatorischen Belastung auf die Nabe eines Kraftfahrzeugs angeordnet ist. Zur Anbindung der Nabe steht ein Adapter bereit, der über eine Klemm- und Zentriervorrichtung mit selbiger verbindbar ist. Hierzu wird das Kraftfahrzeug mittels einer handelsüblichen Fahrzeug-Hebebühne oder einem Kran oder einer am Produktionsband bereits vorhandene Trage- und Transporteinrichtung in eine gewünschte Prüf- und Einstellposition verfahren und dort arretiert. Insbesondere erfolgt eine Fixierung des Kraftfahrzeugs mit Fahrzeugaufnahmen durch vier positionierbare, an die jeweiligen Fahrzeugspuren an den jeweiligen Radstand anpassbare Fahrzeugaufnahmen, die manuell verstellbar und arretierbar oder aber hydraulisch positionierbar oder entsprechend geregelt sind. Auf den Fahrzeugaufnahmen sind die Adapter befestigt, die zum einen das Fahrzeug tragen und zum anderen an den Achsschenkeln so abstützen, dass die ungefederten Massen, insbesondere die Räder-/Reifen-/Bremsbauteile in Prüf- und Einstelllage gehalten werden. Es hat sich jedoch herausgestellt, dass das Koppeln der bereits auf den Fahrzeugaufnahmen angeordneten Adaptervorrichtungen mit den Naben des Kraftfahrzeugs sehr zeitintensiv ist, da die Adaptervorrichtungen stets aufs Neue an die Gegebenheiten des zu prüfenden Kraftfahrzeugs eingestellt werden müssen.

Jedoch gerade im Hinblick auf die zukünftige RDE (Real Driving Emissions)-Gesetzgebung, der zufolge Abgasschadstoffe nicht nur auf dem Prüfstand, sondern auch bei realen Straßenfahrten gemessen werden sollen, ist zu erwarten, dass die Kraftfahrzeuge nur noch kurze Zeit im Prüfstand verbleiben.

Das Dokument US 6 044 696 betrifft einen Fahrzeugfunktionsprüfstand, bei dem jeweils eine Belastungseinrichtung mit an Radnaben eines Fahrzeugs angebrachten Adaptionsmitteln verbindbar ist.

Es ist eine Aufgabe der Erfindung, eine Prüfvorrichtung und einen Prüfstand anzugeben, die eine erhöhte Produktivität sowie reduzierte Betriebskosten aufgrund reduzierter Rüstzeiten aufweisen.

Diese Aufgabe wird mit einer Prüfvorrichtung mit den Merkmalen des Anspruchs 1, einem Prüfstand mit den Merkmalen des Anspruchs 18 und einem Prüfstand mit den Merkmalen des Anspruchs 19 gelöst. Die Lehre der Ansprüche wird durch ausdrückliche Bezugnahme zum Gegenstand der Beschreibung gemacht.

Vorteilhafte Ausgestaltungen der Prüfvorrichtung und der Prüfstande sind in den jeweiligen abhängigen Ansprüchen offenbart.

In einem ersten Aspekt der Erfindung wird eine Prüfvorrichtung für einen Prüfstand für Kraftfahrzeuge vorgeschlagen. Die Prüfvorrichtung weist vorzugsweise eine Lasteinrichtung zum Aufbringen eines Antriebs- und/oder eines Belastungsmomentes auf eine Nabe eines zu prüfenden Kraftfahrzeugs, eine Adaptervorrichtung, die in einer Prüfposition die Nabe des Kraftfahrzeugs mit der Lasteinrichtung, insbesondere mit deren Welle, koppelt, und eine Abstützvorrichtung für die Adaptervorrichtung auf. Die Abstützvorrichtung und die Lasteinrichtung weisen eine gemeinsame bewegliche Basis auf.

Eine Lasteinrichtung im Sinne der Erfindung ist eine Belastungsmaschine, insbesondere eine Elektromaschine, ein Dynamometer oder ein Generator und kann vorzugsweise auch als Elektromotor dienen, um ein positives Drehmoment bereitzustellen.

Eine Adaptervorrichtung im Sinne der Erfindung ist eingerichtet, um einen Achsenabschnitt eines Kraftfahrzeugs, insbesondere die Nabe, mit einer außerhalb vom Fahrzeug eingerichteten Vorrichtung zu koppeln. Die Adaptervorrichtung kann insbesondere ein Element aufweisen, welches direkt mit der Nabe gekoppelt wird, oder zwei Elemente, wobei ein Element auf der Nabe montiert wird und das andere Element einen Flansch aufweist.

Eine Abstützvorrichtung im Sinne der Erfindung dient zum Abstützen der Adaptervorrichtung, insbesondere gegen die Schwerkraft, vorzugsweise aber auch zum Führen der Gesamtheit aus Welle der Lasteinrichtung und Nabe des Kraftfahrzeugs bzw. eines Achsenabschnitts des Kraftfahrzeugs.

Da die Abstützvorrichtung die Adaptervorrichtung bevorzugt in der Prüfposition an der Lasteinrichtung abstützt, entfällt ein zeitaufwendiges Vormontieren der Adaptervorrichtungen an den Naben des Kraftfahrzeugs auf der Hebebühne sowie ein zeitaufwendiges Einstellen und Ankoppeln der Adaptervorrichtungen an den Wellen der Lasteinrichtungen. Ferner da die Abstützvorrichtung die Adaptervorrichtung des Weiteren an der beweglichen Basis abstützt, kann die Adaptervorrichtung synchron mit der Lasteinrichtung verstellt und an die Spurbreite angepasst werden. Das zu prüfende Kraftfahrzeug muss daher lediglich in eine ungefähre Prüfposition gebracht und mit der Adaptervorrichtung gekoppelt werden. Hierzu ist es aber nicht erforderlich, das Fahrzeug exakt an den Adaptervorrichtungen zu positionieren. Durch die Möglichkeit der Verstellung bzw. Bewegung der Einheit Lastmaschine/Adaptervorrichtung kann die Lastmaschine bzw. die mehreren Lastmaschinen verfahren werden und in eine endgültige Position gebracht werden, um mit den Radnaben gekoppelt werden zu können. Hierzu ist es dann nur noch erforderlich, die Prüfvorrichtung an die Spurbreite des Kraftfahrzeugs anzupassen, indem die bewegliche Basis verstellt und/oder verfahren wird. Bevorzugt ist die Verstellrichtung im Wesentlichen senkrecht zu der Kraftfahrzeuglängsrichtung. Auf diese Weise können die Rüstzeiten und daraus resultierend die Produktivität erhöht und die Betriebskosten gesenkt werden. Zudem lassen sich die Versuche aufgrund der durch die Adaptervorrichtung vorgegebenen Position exakt reproduzieren.

Bevorzugt weist die Adaptervorrichtung einen Flansch und einen Adapter mit einem Lochkranz auf. Der Adapter ist mit einer Vielzahl an Fahrzeugnabenlochbildern kombinierbar. Über den Flansch kann der Adapter an der Adaptervorrichtung angekoppelt werden.

In einer vorteilhaften Ausgestaltung ist die Prüfvorrichtung in der Weise ausgebildet, um die Adaptervorrichtung und die Lasteinrichtung mittels der Abstützvorrichtung in einem vorbestimmten Abstand zueinander zu halten. Bevorzugt entspricht dieser vordefinierte Abstand demjenigen der zur Kopplung der Welle mit der Adaptervorrichtung erforderlich ist. Dadurch ist es nicht mehr erforderlich, die Welle für jeden Prüfvorgang neu einzustellen, weshalb die Rüstzeiten reduziert sind.

In einer weiteren vorteilhaften Ausgestaltung weist die Abstützvorrichtung eine Tragstruktur auf, die derart ausgebildet ist, dass die Adaptervorrichtung stets in dem Zustand der Prüfposition abgestützt ist. Bevorzugt ist die Abstützvorrichtung derart ausgebildet, dass diese im gekoppelten Zustand als fahrzeugseitiges Lager für das Kraftfahrzeug dient. Dadurch kann auf einen Untersatz, wie beispielsweise eine Hebebühne, zur Stützung des Kraftfahrzeugs während der Prüfung verzichtet werden.

In einer weiteren vorteilhaften Ausgestaltung weist die Tragstruktur wenigstens einen Träger und eine auf dem Träger angeordnete Lagereinrichtung zum Lagern der Adaptervorrichtung auf. Der Träger stützt sich bevorzugt an der beweglichen Basis ab, insbesondere ist der Träger mit der beweglichen Basis verbunden. Weiterhin bevorzugt kann der Träger als ein Längsträger ausgebildet sein, der sich in Richtung des zu prüfenden Kraftfahrzeugs erstreckt. Die auf dem Träger angeordnete Lagereinrichtung ist bevorzugt derart ausgebildet, dass sie die an die Nabe des Kraftfahrzeugs anzuschließende Adaptervorrichtung, insbesondere deren Adapter, unmittelbar abstützt und/oder lagert. Die Lagereinrichtung kann einteilig oder mehrteilig ausgebildet sein. Der Träger und/oder die Lagereinrichtung können als Profilelemente aus einem metallischen Werkstoff, insbesondere Stahl, gebildet sein.

In einer weiteren vorteilhaften Ausgestaltung ist der Träger mit der Basis verbunden. Der Träger kann mit der beweglichen Basis kraftschlüssig, formschlüssig und/oder stoffschlüssig verbunden sein. Bevorzugt ist der Träger kraftschlüssig mit der beweglichen Basis verbunden, insbesondere verschraubt. Dadurch kann der Träger je nach Anwendungsfall oder im Schadensfall einfach ausgetauscht werden. Bevorzugt weist die bewegliche Basis zum Verbinden mit dem Träger Befestigungsstellen, insbesondere Löcher, zum Einsetzen von Befestigungselementen, vorzugsweise Schrauben, auf.

In einer weiteren vorteilhaften Ausgestaltung weist die Lagereinrichtung einen Aufnahmeabschnitt und wenigstens ein Lagerelement zum Lagern der Adaptervorrichtung auf. Bevorzugt stützt sich die Adaptervorrichtung auf dem Aufnahmeabschnitt ab. Weiterhin bevorzugt nimmt der Aufnahmeabschnitt das Lagerelement auf, wobei weiterhin bevorzugt das Lagerelement zwischen dem Aufnahmeabschnitt und der Adaptervorrichtung angeordnet ist. Das Lagerelement ermöglicht eine relative Verdrehbarkeit der Adaptervorrichtung zu der Abstützvorrichtung, um ein Antriebs- und/oder Bremsmoment auf die Nabe des zu prüfenden Kraftfahrzeugs übertragen zu können. Weiterhin bevorzugt ist die Adaptervorrichtung, insbesondere der Adapter der Adaptervorrichtung, spielfrei von dem Aufnahmeabschnitt aufgenommen. Das Lagerelement kann als Gleitlager oder Wälzlager, insbesondere Kugellager, ausgebildet sein. Vorteilhaft ist das Lagerelement kraftschlüssig mit dem Aufnahmeabschnitt verbunden, insbesondere in den Aufnahmeabschnitt eingepresst.

In einer weiteren vorteilhaften Ausgestaltung weist die Lagereinrichtung zwei zueinander beabstandete Trägerplatten zur Aufnahme der Adaptervorrichtung auf, die auf einer Grundplatte angeordnet sind. Eine derartige Lagereinrichtung ist einfach und kostengünstig herzustellen. Bevorzugt sind die beiden Trägerplatten über Rippen an der Grundplatte abgestützt. Die Trägerplatten können stoffschlüssig und/oder kraftschlüssig mit der Grundplatte verbunden sein. Bevorzugt ist zwischen den beiden Trägerplatten, insbesondere an deren freiem Ende, das Lagerelement angeordnet.

In einer weiteren vorteilhaften Ausgestaltung weist die Lagereinrichtung einen Tragarm mit einem Lagerauge zur Aufnahme der Adaptervorrichtung auf. Das Lagerauge nimmt bevorzugt die Adaptervorrichtung, insbesondere spielfrei auf. Das Lagerelement kann innerhalb des Lagerauges angeordnet sein. Vorteilhaft ist das Lagerelement in das Lagerauge eingepresst. Der Tragarm kann näherungsweise pfannenförmig ausgebildet sein.

In einer weiteren vorteilhaften Ausgestaltung ist die Lagereinrichtung bewegbar und/oder verschwenkbar auf dem Träger angeordnet. Auf diese Weise können Feineinstellungen zur Kopplung der Adaptervorrichtung mit einer Nabe und/oder der Welle vorgenommen werden. Die Lagereinrichtung kann eine Verstelleinrichtung aufweisen, die weiter bevorzugt mit der Grundplatte und/oder dem Tragarm verbunden ist. Bevorzugt ermöglicht die Verstelleinrichtung eine Relativbewegung und/oder -rotation der Lagereinrichtung zu dem Träger. Zum Feststellen der Lagereinrichtung kann eine Feststelleinrichtung vorgesehen sein. Die Lagereinrichtung kann relativ zu der Nabe bewegt und/oder verschwenkt und dann mittels der Feststelleinrichtung in dieser geänderten Position fixiert werden, um die Adaptervorrichtung an unterschiedliche Winkelstellungen der Welle und/oder Nabe, insbesondere die Spur und/oder den Sturz des Kraftfahrzeugs, anzupassen. Bevorzugt ist die Verstelleinrichtung als ein Drehgelenk und/oder eine Kugelbuchse ausgebildet. Weiter bevorzugt liegt die Kugelbuchse auf einer Platte, insbesondere einer gehärteten Platte, beweglich auf. Bevorzugt ist das Drehgelenk und/oder die Kugelbuchse mit der Grundplatte, den Trägerplatten und/oder dem Tragarm verbunden, insbesondere verschraubt. Weiter bevorzugt weist die Feststelleinrichtung wenigstens ein Feststellelement auf. Das Feststellelement kann ein Schraubenelement sein, das in den Tragarm und/oder eine der Trägerplatten eingeschraubt werden kann. Durch Lösen des Feststellelementes kann die Lagereinrichtung relativ zu dem Träger bewegt und/oder verschwenkt werden. Weiter bevorzugt weist die Lagereinrichtung wenigstens einen Endanschlag auf. Bevorzugt ist der Endanschlag als ein Gummipuffer ausgebildet. Ferner kann die Lagereinrichtung relativ zu dem Träger bewegt werden, um so die Abstützvorrichtung an die Länge der Welle und/oder der Spurbreite des zu prüfenden Kraftfahrzeugs anzupassen. Hierzu kann ein Langloch vorgesehen sein, in welches beispielsweise ein mit der Lagereinrichtung verbundene Schraube eingreifen kann. Bei einem Lösen der Schraube kann die Lagereinrichtung in dem Langloch verschoben werden.

In einer weiteren vorteilhaften Ausgestaltung ist die Lagereinrichtung schwingungsentkoppelt auf dem Träger gelagert. Dadurch können die während der Prüfung auftretenden Schwingungen isoliert werden, um so die Messgenauigkeit zu erhöhen. Zudem können die auf den Träger wirkenden Schwingungen reduziert werden, um so eine Beschädigung des Trägers zu vermeiden. Hierzu kann zwischen dem Träger und der Lagereinrichtung wenigstens ein Lagerelement angeordnet sein. Das Lagerelement kann als Elastomerlager und/oder als Hydrolager ausgebildet sein.

In einer weiteren vorteilhaften Ausgestaltung weist der Träger eine Tragplatte auf, auf der die Lagereinrichtung angeordnet ist. Die Tragplatte dient als großflächige Auflage für die Lagereinrichtung, so dass die von der Adaptervorrichtung auf die Lagereinrichtung wirkenden Kräfte auf den Tragarm abgeleitet werden können. Vorteilhaft stützt sich die Lagereinrichtung über ein Lagerelement, insbesondere über wenigstens ein Elastomerlager und/oder ein Hydrolager, auf der Tragplatte ab.

In einer weiteren vorteilhaften Ausgestaltung ist die Basis bewegbar auf einer Grundplatte angeordnet, wobei die Grundplatte vorzugsweise wenigstens eine Führungsschiene zum Führen der Basis aufweist. Dadurch kann die Lasteinrichtung zusammen mit der Adaptervorrichtung synchron verfahren werden, um die Prüfvorrichtung, insbesondere die Adaptervorrichtung, an die Spurbreite des zu prüfenden Kraftfahrzeugs anzupassen. Die Bewegungsrichtung ist bevorzugt senkrecht zu einer Kraftfahrzeuglängsrichtung. Die Führungsschiene kann als Leichtlaufschiene ausgebildet sein. Weiterhin bevorzugt sind auf der Bodenplatte wenigstens zwei zueinander parallele Führungsschienen angeordnet.

In einer weiteren vorteilhaften Ausgestaltung ist die Grundplatte bewegbar auf einer Bodenplatte angeordnet, wobei die Bodenplatte vorzugsweise wenigstens eine Führungsschiene zum Führen der Grundplatte aufweist. Vorteilhaft ist die Führungsschiene als eine Leichtlaufschiene ausgebildet. Die Bewegungsrichtung ist bevorzugt senkrecht zu einer Kraftfahrzeuglängsrichtung. Dias Verschieben der Grundplatte auf der Bodenplatte kann manuell oder mittels eines Motors erfolgen.

In einer weiteren vorteilhaften Ausgestaltung weist die Prüfvorrichtung wenigstens eine Antriebseinrichtung auf, um die Basis auf der Grundplatte und/oder die Grundplatte auf der Bodenplatte zu bewegen. Die Antriebseinrichtung ist bevorzugt als ein Elektromotor oder ein Druckluftmotor ausgebildet. Bevorzugt ist an den Elektromotor ein Zahnrad und/oder ein Getriebe angeschlossen, das in eine auf der Grundplatte angeordnete Zahnstange eingreift, ausgebildet sein. Ferner kann die Antriebseinrichtung einen manuell betätigbaren Kurbeltrieb aufweisen, der in die Zahnstange eingreift.

In einer weiteren vorteilhaften Ausgestaltung weist die Lasteinrichtung eine Welle auf, die mit der Adaptervorrichtung verbunden ist, wobei die Adaptervorrichtung formschlüssig mit der Welle verbunden ist. Ferner kann die Welle mit der Adaptervorrichtung auch kraftschlüssig verbunden sein. Die Welle kann als eine homokinematische Gelenkwelle ausgebildet sein.

In einer weiteren vorteilhaften Ausgestaltung weist die Adaptervorrichtung ein erstes Adapterelement, das mit der Adaptervorrichtung, insbesondere dem Flansch, verbindbar ist, und ein zweites Adapterelement, das mit der Nabe eines Kraftfahrzeugs verbindbar ist, auf, wobei die beiden Adapterelemente zum Ankoppeln der Nabe an die Lasteinrichtung miteinander verbindbar sind. Bevorzugt sind die beiden Adapterelemente formschlüssig und/oder kraftschlüssig miteinander verbindbar. Das zweite Adapterelement kann auf den jeweiligen Naben vormontiert sein und mit einem fahrbaren Untersatz versehen sein, um die Kopplung der einzelnen Achsen des Kraftfahrzeugs mit den Prüfvorrichtungen zu vereinfachen und zu beschleunigen.

Ferner wird ein Prüfstand für ein Kraftfahrzeug mit wenigstens einer Prüfvorrichtung vorgeschlagen.

Zudem wird ein Prüfstand für ein Kraftfahrzeug mit wenigstens zwei Prüfvorrichtungen vorgeschlagen, wobei die beiden Prüfvorrichtungen in entgegengesetzte Richtungen, insbesondere unabhängig voneinander, auf dem Prüfstand bewegbar sind.

Die Prüfstände zeichnen sich durch die an den Prüfvorrichtungen angeordneten Abstützvorrichtungen aus, die die Adaptervorrichtungen in einem vorbestimmten Abstand zu den Lasteinrichtungen halten. Zudem können die Lasteinrichtungen zusammen mit den Adaptervorrichtungen synchron verfahren werden. Dadurch entfällt ein zeitaufwendiges Vormontieren der Adaptervorrichtungen an den Naben eines Kraftfahrzeugs sowie ein zeitaufwendiges Einstellen und Ankoppeln der Adaptervorrichtungen an den Wellen der Prüfvorrichtungen. Zur Prüfung eines Kraftfahrzeugs muss dieses nur in die Prüfposition gebracht und mit den Adaptervorrichtungen gekoppelt werden. Hierzu müssen lediglich die Prüfvorrichtungen an die Spurbreite des Kraftfahrzeugs angepasst werden, indem die bewegliche Basis verfahren wird. Dadurch weisen die Prüfstände geringe Rüstzeiten und Betriebskosten sowie eine hohe Produktivität auf.

In einer weiteren vorteilhaften Ausgestaltung ist eine Zuführvorrichtung zum Überführen eines Kraftfahrzeugs in eine Position, in der eine Nabe des Kraftfahrzeugs mit einer Adaptervorrichtung der Prüfvorrichtung verbindbar ist, vorgesehen. Das Kraftfahrzeug wird bevorzugt auf der Zuführvorrichtung positioniert und gegebenenfalls mittels Klemmelementen fixiert und in die Prüfvorrichtung gefahren und schließlich in die Prüfposition gebracht, um die Naben des Kraftfahrzeugs mit den Adaptervorrichtungen zu koppeln. Die Zuführvorrichtung kann nach dem Ankoppeln wieder aus dem Prüfstand entfernt werden, oder im Prüfstand verbleiben.

In einer weiteren vorteilhaften Ausgestaltung ist die Zuführvorrichtung als eine verfahrbare Hebebühne ausgebildet. Die Hebebühne kann als eine handelsübliche, hydraulische, pneumatische oder mit einem Spindelantrieb betriebene Fahrzeughebebühne ausgeführt sein. Ferner kann die Hebebühne mittels einer Fernsteuerung gesteuert werden.

Nachfolgend werden die Prüfvorrichtung, die Prüfstände sowie weitere Merkmale und Vorteile anhand von Ausführungsbeispielen näher erläutert, die in den Zeichnungen schematisch dargestellt sind. Hierbei zeigen:
- Fig. 1: eine teilweise schematische Draufsicht auf einen Prüfstand;
- Fig. 2: eine teilweise schematische perspektivische Ansicht einer Prüfvorrichtung gemäß einer ersten Ausführungsform;
- Fig. 3: eine teilweise schematische vergrößerte Ansicht eines teilweisen Querschnitts durch die in Fig. 2 gezeigte Prüfvorrichtung; und
- Fig. 4: eine teilweise schematische perspektivische Ansicht einer Prüfvorrichtung gemäß einer zweiten Ausführungsform.

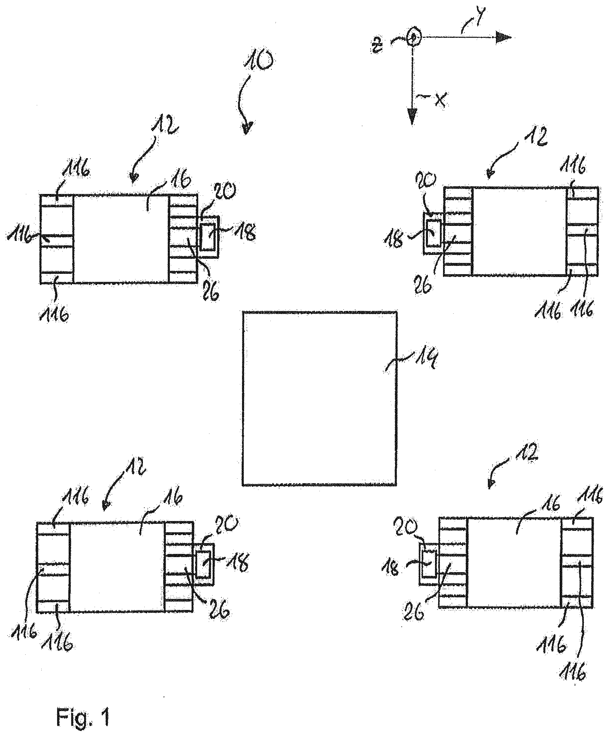

In Fig. 1 ist ein Prüfstand 10 für Kraftfahrzeuge zur Durchführung von Fahrzeugversuchen gezeigt, mittels dem Belastungen ähnlich wie im realen Fahrbetrieb auf ein Kraftfahrzeug simuliert werden können, um so beispielsweise Rückschlüsse auf das Kraftfahrzeugverhalten oder dessen Durchschnittsverbrauch ziehen zu können.

Der Prüfstand 10 weist vorzugsweise vier auf einem Boden oder einem Fundament angeordnete Prüfvorrichtungen 12, die zur Durchführung der Fahrzeugversuche Belastungen auf ein zu prüfendes Kraftfahrzeug aufbringen können, und eine Zuführvorrichtung 14 auf. Ferner kann der Prüfstand 10 eine Bodenplatte aufweisen, auf der die Prüfvorrichtungen 12 angeordnet sind. Für die Prüfung wird jeweils eine Prüfvorrichtung 12 mit jeweils einer mit der Radaufhängung verbundenen Nabe eines zu prüfenden Kraftfahrzeugs gekoppelt. Das Kraftfahrzeug stützt sich in der Prüfposition vorzugsweise lediglich über die Radaufhängung und den Naben an den Prüfvorrichtungen 12 ab. Dies entspricht im Wesentlichen der Stützung des Kraftfahrzeugs im realen Fahrbetrieb durch die Räder. Das Ankoppeln wird im Folgenden noch näher erläutert. Hierzu sind die Prüfvorrichtungen 12 in y-Richtung bewegbar, also in einer Richtung senkrecht zu einer Kraftfahrzeuglängsrichtung, die der x-Richtung entspricht, wobei die einander gegenüberliegenden Prüfvorrichtungen 12 in entgegengesetzte y-Richtungen, insbesondere unabhängig voneinander, bewegbar sind. Zur Verbindung der Naben mit den Prüfvorrichtungen 12 muss ein Kraftfahrzeug zunächst in den Prüfstand gefahren und in eine Prüfposition überführt werden. Dies erfolgt mittels der Zuführvorrichtung 14. Die Zuführvorrichtung 14 ist vorzugsweise als eine verfahrbare, insbesondere hydraulische, Hebebühne ausgebildet, die vorzugsweise mittels einer Fernsteuerung steuerbar ist. Die Hebebühne kann vorzugsweise auch pneumatisch oder mit einem Spindelantrieb ausgeführt sein. Während des Prüfvorgangs in der Prüfposition wird die Zuführvorrichtung 14 vorzugsweise entfernt. Weiter vorzugsweise kann diese aber auch am Kraftfahrzeug installiert bleiben und dieses in der Prüfposition halten.

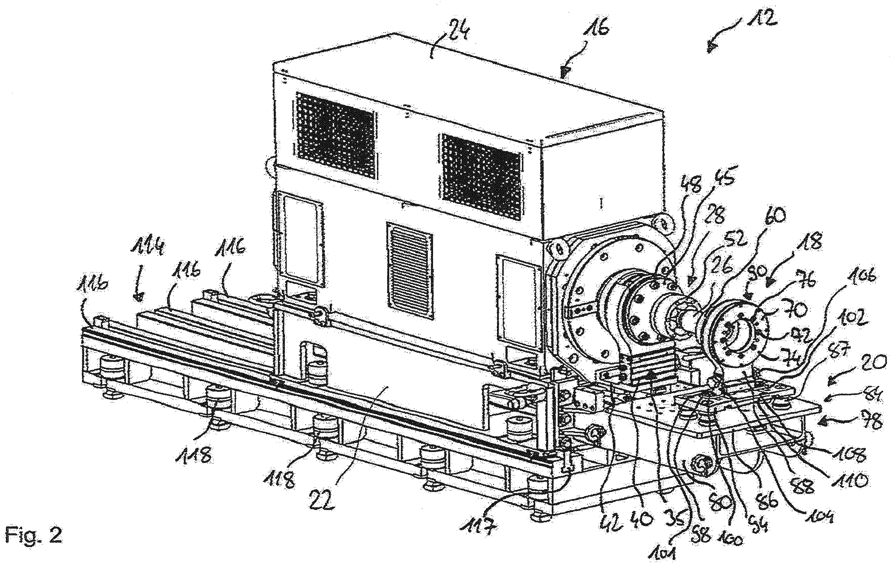

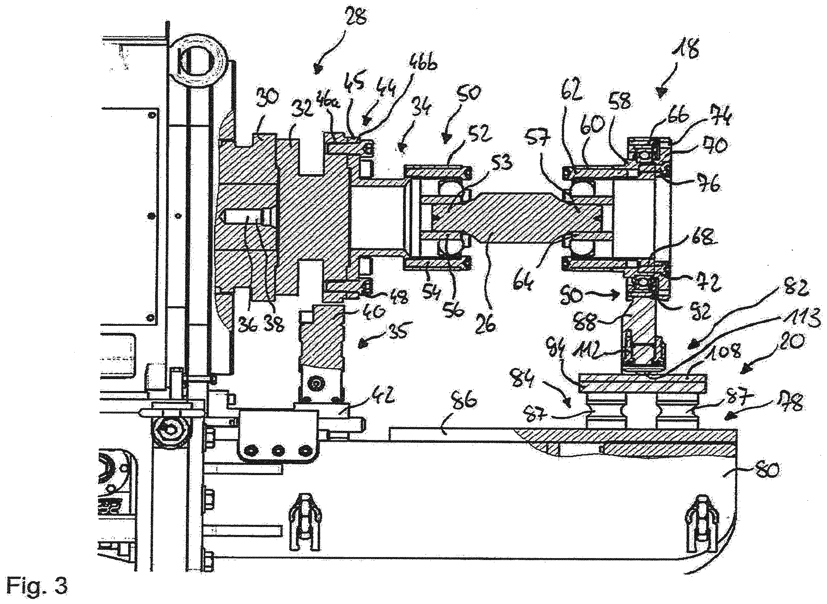

In den Figuren 2 und 3 ist eine erste Ausführungsform einer Prüfvorrichtung 12 gezeigt. Die Prüfvorrichtung 12 umfasst eine Lasteinrichtung 16 zum Aufbringen eines Antriebs- und/oder eines Belastungsmoments auf eine Nabe eines zu prüfenden Kraftfahrzeugs, eine Adaptervorrichtung 18, die in der Prüfposition die Nabe eines Kraftfahrzeugs mit der Lasteinrichtung 16 koppelt, und eine Abstützvorrichtung 20, die die Adaptervorrichtung 18 in der Prüfposition an der Prüfvorrichtung 12 abstützt.

Die Lasteinrichtung 16 ist vorzugsweise in Form eines Dynamometers ausgebildet und auf einer bewegbaren Basis 22 angeordnet. Die Lasteinrichtung 16 ist von einem Gehäuse 24 umgeben, das mit der Basis 22 in an sich bekannter Weise verbunden ist.

Die Lasteinrichtung 16 weist ferner eine Welle 26 auf, die mit der Adaptervorrichtung 18 verbunden ist, um so ein Antriebs- und /oder ein Belastungsmoment auf eine Nabe zu übertragen. Die Welle 26 kann als eine homokinematische Gelenkwelle und/oder als eine Welle-Welle-Verbindung ausgebildet sein. Wie insbesondere in Fig. 3 ersichtlich ist, ist die Welle 26 über einen Drehmomentmessflansch 28 mit der Lasteinrichtung 16 verbunden. Der Drehmomentmessflansch 28 umfasst einen gehäuseseitigen Flansch 30, einen Verbindungsflansch 34, einen Rotor 32 und einen Stator 35. Der Rotor 32 ist vorzugsweise form- und/oder kraftschlüssig mit dem gehäuseseitigen Flansch 30 verbunden. Der Drehmomentmessflansch 28 stützt sich über eine mit der Basis 22 verbundene, insbesondere verschraubte, Platte 42 an der Basis 22 ab.

Der Verbindungsflansch 34 weist an einem ersten Ende 44 einen Flansch 45 auf, der kraft- und formschlüssig mit dem Rotor 32 verbunden ist. Hierzu weisen das Rotor 32 und der Flansch 45 zueinander korrespondierende Löcher 46a, 46b auf, in die Befestigungselemente 48, vorzugsweise Schrauben, eingebracht sind. An einem zweiten Ende 50 weist der Verbindungsflansch 34 eine Aufnahmehülse 52 zur Aufnahme eines ersten Endes 53 der Welle 26 auf. Wie insbesondere in Fig. 2 ersichtlich ist, ist die Aufnahmehülse 52 mit dem Verbindungsflansch 34 über Befestigungselemente 54, vorzugsweise Schrauben, verbunden. In der Aufnahmehülse 52 ist eine Innenhülse 56 angeordnet, die das erste Ende 53 der Welle 26 formschlüssig und/oder kraftschlüssig aufnimmt.

Ein zweites Ende 57 der Welle 26 ist mit der Adaptervorrichtung 18 verbunden. Die Adaptervorrichtung 18 weist einen Flansch 58 und eine Aufnahmehülse 60 auf, wobei die Aufnahmehülse 60 über Befestigungselemente 62, vorzugsweise Schrauben, mit dem Flansch 58 verbunden ist. In der Aufnahmehülse 60 ist eine Innenhülse 64 angeordnet, die das zweite Ende 57 der Welle 26 formschlüssig und/oder kraftschlüssig aufnimmt. Der Flansch 58 umfasst ferner einen Flanschabschnitt 66 mit einem Lochkranz 68.

Die Adaptervorrichtung 18 weist zudem einen Flansch 70 auf, der einen inneren Lochkranz 72 und einen äußeren Lochkranz 74 umfasst. Der innere Lochkranz 72 entspricht dabei dem Lochkranz 68 des Flanschabschnitts 66, so dass der Flansch 70 über den inneren Lochkranz 72 an dem Flanschabschnitt 66 mittels Befestigungselemente 76, vorzugsweise Schrauben, befestigt werden kann. Der äußere Lochkranz 74 entspricht einer Vielzahl an unterschiedlichen Fahrzeugnabenlochbildern. An den Flansch 70 kann ein nicht dargestellter, zum jeweiligen Kraftfahrzeug passender Adapter befestigt werden, der mit der Nabe gekoppelt werden kann.

In einer nicht dargestellten Ausführungsform kann der Adapter ein erstes Adapterelement, das mit dem Flansch 70 verbindbar ist, und ein zweites Adapterelement aufweisen. Das zweite Adapterelement kann auf eine Nabe eines Kraftfahrzeugs vorinstalliert werden. Die beiden Adapterelemente sind dann vorzugsweise formschlüssig und/oder kraftschlüssig miteinander verbindbar.

Wie in den Figuren 2 und 3 ersichtlich ist, stützt sich die Adaptervorrichtung 18 über die Abstützvorrichtung 20 an der Basis 22 ab. Die Abstützvorrichtung 20 weist eine Tragstruktur 78 auf, die einen Träger 80, der vorzugsweise als Längsträger ausgebildet ist, und eine Lagereinrichtung 82 zum Lagern der Adaptervorrichtung 18 umfasst. Der Träger 80 ist mit der Basis 22 kraftschlüssig verbunden, vorzugsweise verschraubt, wobei an einem freien Ende 84 des Trägers 80 die Lagereinrichtung 82 angeordnet ist. Hierzu weist der Träger 80 an seinem freien Ende 84 eine Tragplatte 86 auf, auf der sich die Lagereinrichtung 82 schwingungsentkoppelt über vorzugsweise vier Lager 87, die als Elastomerlager und/oder Hydrolager ausgebildet sein können, abstützt.

Die Lagereinrichtung 82 weist ferner einen Tragarm 88 mit einem Lagerauge 90 zur Aufnahme der Adaptervorrichtung 18, insbesondere des Flansches 58, ein Lagerelement 92 vorzugsweise ein Wälzlager, weiter vorzugsweise ein Kugellager, und eine Lochplatte 94 auf. Der Tragarm 88 ist auf der Lochplatte 94 befestigt, wobei sich die Lochplatte 94 mittels der Lager 87 auf der Tragplatte 86 abstützt.

Der Tragarm 88 ist über eine Feststelleinrichtung 96 mit der Lochplatte 94 verbunden. Die Feststelleinrichtung 96 weist zwei sich gegenüberliegende Winkel 98 auf, zwischen denen der Tragarm 88 angeordnet ist. Ein erster Schenkel 100 des Winkels 98 ist über ein Befestigungselement 101, vorzugsweise eine Schraube, mit einem in der Lochplatte 94 ausgebildeten Langloch 102 verbunden. Durch Lösen des Befestigungselementes 101 kann der Tragarm 88 relativ zu dem Träger 80 verschoben werden. Ein zweiter Schenkel 104 des Winkels 98 liegt an dem Tragarm 88 an und ist mit dem Tragarm 88 über ein Feststellelement 106, vorzugsweise eine Schraube, verbunden. Der Tragarm 88 weist ferner eine Kugelbuchse 112 mit einer Kugel 113 auf, die auf einer Platte 108, insbesondere einer gehärteten Platte, beweglich aufliegt, wie in Fig. 3 ersichtlich ist. Die Platte 108 ist in eine in der Lochplatte 94 ausgebildete Vertiefung 110 formschlüssig eingesetzt. Über die Kugelbuchse 112 kann die Adaptervorrichtung 18 verschwenkt und/oder bewegt werden und so an den Sturz und/oder die Spur des Kraftfahrzeugs eingestellt und mittels der Feststelleinrichtung 96 in der eingestellten Position fixiert werden. Innerhalb des Lagerauges 90 ist das Lagerelement 92 angeordnet, das sich über seine äußere Umfangsfläche an einer Innenfläche des Lagerauges 90 abstützt und das an seiner inneren Umfangsfläche an dem Flanschabschnitt 66 anliegt. Vorzugsweise ist das Lagerelement 92 in das Lagerauge 90 eingepresst.

Die Basis 22 ist bewegbar auf einer Grundplatte 114 angeordnet. Hierzu sind auf der Grundplatte 114 Führungsschienen 116, vorzugsweise drei parallele Führungsschienen 116, angeordnet, die vorzugsweise als Leichtlaufschienen ausgebildet sind. In die Führungsschienen 116 greifen von der Basis 22 abragende Führungselemente 117 ein. Die Bewegung der Basis 22 relativ zu der Grundplatte 114 kann mittels einer nicht dargestellten Antriebseinrichtung erfolgen, die beispielsweise einen Elektromotor mit einem daran angeflanschten Zahnrad und/oder Getriebe aufweist, welches die rotatorische Bewegung des Elektromotors in eine translatorische Bewegung umwandelt. Das Zahnrad und/oder Getriebe kann mit einer auf der Grundplatte 114 angeordneten Zahnstange in Eingriff stehen. Ferner kann die Antriebseinrichtung als ein manuell betätigbarer Kurbeltrieb oder als ein Druckluftmotor ausgebildet sein. Die Grundplatte 114 selbst ist mit einer Bodenplatte des Prüfstandes 10, einem Boden oder einem Fundament über Befestigungselemente 118 verbunden.

Nachfolgend wird eine mögliche Vorgehensweise zum Ankoppeln der Naben eines zu prüfenden Kraftfahrzeugs an die Prüfvorrichtungen 12 erläutert. Zunächst wird das Kraftfahrzeug auf der Zuführvorrichtung 14 fixiert. Dies kann über entsprechende Bügelhalter oder andere Sicherungsmöglichkeiten oder über automatische Kipp- oder Klemmelemente erfolgen. Danach wird die Zuführvorrichtung 14 in den Prüfstand 10 gefahren und derart positioniert, dass die Naben des Kraftfahrzeugs im Bereich der Prüfvorrichtungen 12, insbesondere der Adaptervorrichtungen 18, angeordnet sind. Dann wird die Zuführvorrichtung 14 in z-Richtung verfahren, bis die Prüfposition erreicht ist. Wenn sich die Naben in der Prüfposition befinden, werden die Prüfvorrichtungen 12 zur Anpassung an die Spurbreite des Kraftfahrzeugs in Richtung der Nabe, also in y-Richtung, verfahren. Anschließend werden die an den Flanschen 70 befestigten Adapter mit den Naben verbunden. Dies kann kraft- und/oder formschlüssig erfolgen, beispielsweise mittels Schrauben oder Klemmspannbacken. Ferner ist es auch möglich, bei einem frontgetriebenen oder heckgetriebenen Kraftfahrzeug nur die mit der Antriebswelle verbundenen Naben mit den Prüfvorrichtungen 12 zu koppeln. Bevorzugt werden jedoch alle Naben des Kraftfahrzeugs mit einer Prüfvorrichtung 12 verbunden.

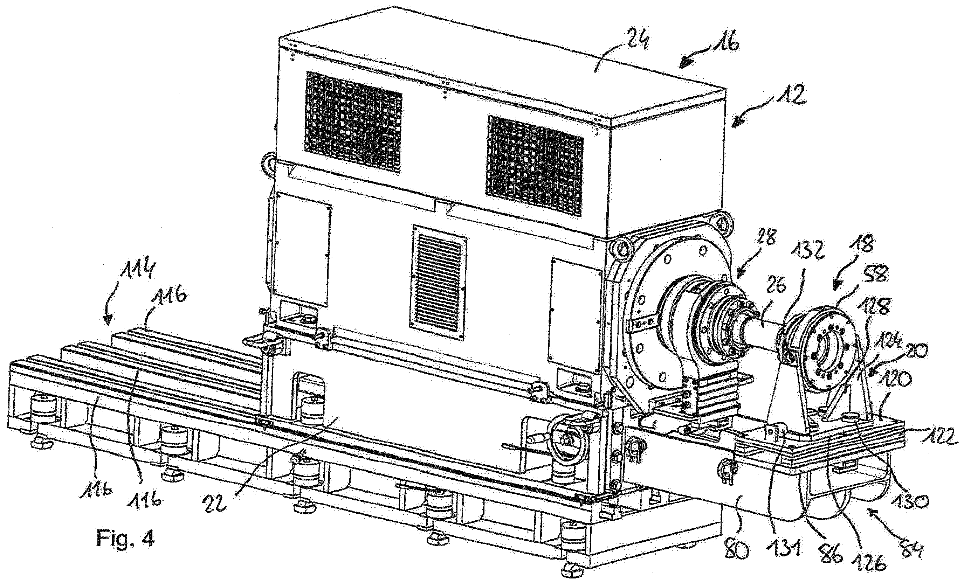

In Fig. 4 ist eine zweite Ausführungsform einer Prüfvorrichtung 12 gezeigt, die sich von der ersten Ausführungsform durch die Ausgestaltung der Abstützvorrichtung 20 unterscheidet. Die in Fig. 4 gezeigte Abstützvorrichtung 20 weist ebenfalls eine Tragstruktur 78 umfassend einen Träger 80 und eine Lagereinrichtung 82 auf. Der Träger 80 ist mit der Basis 22 verbunden, vorzugsweise verschraubt, wobei sich an seinem freien Ende 84 die Lagereinrichtung 82 abstützt. Die Lagereinrichtung 82 stützt sich über eine Auflageplatte 120 und zwei parallelen, sich in Längsrichtung erstreckenden Lagern 122 auf der Tragplatte 86 ab. Die Lager 122 sind vorzugsweise als Elastomerlager ausgebildet. Die Lagereinrichtung 82 umfasst zwei zueinander beabstandete Trägerplatten 124 zur Aufnahme der Adaptervorrichtung 18, insbesondere des Flansches 58, und eine Grundplatte 126, auf der die beiden Trägerplatten 124 angeordnet sind. Die Trägerplatten 124 sind über Rippen 128 an der Grundplatte 126 abgestützt. Die Grundplatte 126 ist auf der Auflageplatte 120 angeordnet, wobei die Grundplatte 126 Kugelbuchsen 130 aufweist, die beweglich auf der Auflageplatte 121 aufliegen. Über die Kugelbuchsen 130 kann die Adaptervorrichtung 18 relativ zu Auflageplatte 120 verschwenkt und/oder bewegt werden, wobei auf der Auflageplatte 120 Endanschläge 131 angeordnet sind, die die Bewegung der Adaptervorrichtung 18 begrenzen. Die Endanschläge 131 sind bevorzugt als Gummianschläge ausgebildet. Weiter bevorzugt ist die Auflageplatte 120 als eine gehärtete Platte ausgebildet. Auf den Trägerplatten 124 stützt sich der Flansch 58 ab, wobei der Flansch 58 über Drehgelenke 132 verschwenkbar mit den Trägerplatten 124 verbunden ist, um die Adaptervorrichtung 18 an den Sturz des Kraftfahrzeugs anzupassen.

Die Prüfvorrichtung 12 und der Prüfstand 10 sind durch die Abstützvorrichtung 20 gekennzeichnet, die die Adaptervorrichtung 18 in einer Prüfposition und in einem vorbestimmten Abstand zu der Lasteinrichtung 16 an der beweglichen Basis 22 abstützt. Dadurch entfällt ein zeitaufwendiges Vormontieren der Adaptervorrichtung 18 an einer Nabe eines Kraftfahrzeugs sowie ein zeitaufwendiges Einstellen und Ankoppeln der Adaptervorrichtungen 18 an die Welle 26 der Prüfvorrichtung 12. Zur Prüfung eines Kraftfahrzeugs muss dieses in die Prüfposition gebracht und mit der Adaptervorrichtung 18 gekoppelt werden. Hierzu muss lediglich die Prüfvorrichtung 12 an die Spurbreite des Kraftfahrzeugs angepasst werden. Da die Lasteinrichtung 16 zusammen mit der Adaptervorrichtung 18 synchron verfahrbar ist, kann die Spurbreite einfach dadurch angepasst werden, dass nur die Basis 22 verfahren wird. Auf diese Weise können die Rüstzeiten und daraus resultierend die Produktivität erhöht und die Betriebskosten gesenkt werden. Zudem lassen die Fahrzeugversuche aufgrund der durch die Abstützvorrichtung 20 vorgegebenen Position der Adaptervorrichtung 18 exakt reproduzieren.

### Bezugszeichenliste

- 10: Prüfstand
- 12: Prüfvorrichtung
- 14: Zuführvorrichtung
- 16: Lasteinrichtung
- 18: Adaptervorrichtung
- 20: Abstützvorrichtung
- 22: Basis
- 24: Gehäuse
- 26: Welle
- 28: Drehmomentmessflansch
- 30: gehäuseseitiger Flansch
- 32: Rotor
- 34: Verbindungsflansch
- 35: Stator
- 42: Platte
- 44: erstes Ende
- 45: Flansch
- 46a: Loch
- 46b: Loch
- 48: Befestigungselement
- 50: zweites Ende
- 52: Aufnahmehülse
- 53: erstes Ende der Welle
- 54: Befestigungselement
- 56: Innenhülse
- 57: zweite Ende der Welle
- 58: Flansch
- 60: Aufnahmehülse
- 62: Befestigungselement
- 64: Innenhülse
- 66: Flanschabschnitt
- 68: Lochkranz
- 70: Flansch
- 72: innerer Lochkranz
- 74: äußerer Lochkranz
- 76: Befestigungselement
- 78: Tragstruktur
- 80: Träger
- 82: Lagereinrichtung
- 84: freies Ende
- 86: Tragplatte
- 87: Lager
- 88: Tragarm
- 90: Lagerauge
- 92: Lagerelement
- 94: Lochplatte
- 96: Feststelleinrichtung
- 98: Winkel
- 100: erster Schenkel
- 101: Befestigungselement
- 102: Langloch
- 104: zweiter Schenkel
- 106: Feststellelement
- 108: Platte
- 110: Vertiefung
- 112: Kugelbuchse
- 113: Kugel
- 114: Grundplatte
- 116: Führungsschiene
- 117: Führungselement
- 118: Befestigungselement

- 120: Auflageplatte
- 122: Lager
- 124: Trägerplatte
- 126: Grundplatte
- 128: Rippen
- 130: Kugelbuchse
- 131: Endanschlag
- 132: Drehgelenk

## Patentansprüche

1. Prüfvorrichtung (12) zur Durchführung von Fahrzeugversuchen an einem zu prüfenden Kraftfahrzeug für einen Prüfstand (10) für Kraftfahrzeuge aufweisend
eine Lasteinrichtung (16) zum Aufbringen eines Antriebs- und/oder eines Belastungsmomentes auf eine Radnabe des zu prüfenden Kraftfahrzeugs, und
eine Adaptervorrichtung (18), die in einer Prüfposition die Radnabe des Kraftfahrzeugs mit der Lasteinrichtung (16), insbesondere mit deren Welle (26), koppelt, und
eine Abstützvorrichtung (20) für die Adaptervorrichtung (18),
**dadurch gekennzeichnet, dass**
die Abstützvorrichtung (20) und die Lasteinrichtung (16) eine gemeinsame bewegliche Basis (22) aufweisen, und
die Lasteinrichtung (16) eine Elektromaschine ist.

2. Prüfvorrichtung (12) nach Anspruch 1, wobei ein Gehäuse (24) der Lasteinrichtung (16) mit der beweglichen Basis (22) verbunden ist.

3. Prüfvorrichtung (12) nach einem der vorangehenden Ansprüche, wobei die Adaptervorrichtung (18) über die Abstützvorrichtung (20) an der beweglichen Basis (22) abgestützt ist.

4. Prüfvorrichtung (12) nach einem der vorangehenden Ansprüche, **dadurch gekennzeichnet, dass** die Prüfvorrichtung (12) in der Weise ausgebildet ist, um die Adaptervorrichtung (18) und die Lasteinrichtung (16) mittels der Abstützvorrichtung (20) in einem vorbestimmten Abstand, der einem zur Kopplung der Welle der Lasteinrichtung (16) mit der Adaptervorrichtung (18) erforderlichen Abstand entspricht, zueinander zu halten.

5. Prüfvorrichtung (12) nach einem der vorangehenden Ansprüche, **dadurch gekennzeichnet, dass** die Abstützvorrichtung (20) eine Tragstruktur (78) aufweist, die wenigstens einen Träger (80) und eine auf dem Träger (80) angeordnete Lagereinrichtung (82) zum Lagern der Adaptervorrichtung (18) aufweist, so dass die Adaptervorrichtung (18) stets in dem Zustand der Prüfposition abgestützt ist.

6. Prüfvorrichtung (12) nach Anspruch 5, **dadurch gekennzeichnet, dass** der Träger (80) mit der Basis (22) verbunden ist.

7. Prüfvorrichtung (12) nach Anspruch 5 oder 6, **dadurch gekennzeichnet, dass** die Lagereinrichtung (82) einen Aufnahmeabschnitt und wenigstens ein Lagerelement (87) zum Lagern der Adaptervorrichtung (18) aufweist.

8. Prüfvorrichtung (12) nach einem der Ansprüche 5 bis 7, **dadurch gekennzeichnet, dass** die Lagereinrichtung (82) zwei zueinander beabstandete Trägerplatten (124) zur Aufnahme der Adaptervorrichtung (18) aufweist, die auf einer Grundplatte (126) angeordnet sind.

9. Prüfvorrichtung (12) nach einem der Ansprüche 5 bis 7, **dadurch gekennzeichnet, dass** die Lagereinrichtung (82) einen Tragarm (88) mit einem Lagerauge (90) zur Aufnahme der Adaptervorrichtung (18) aufweist.

10. Prüfvorrichtung (12) nach einem der Ansprüche 5 bis 9, **dadurch gekennzeichnet, dass** die Lagereinrichtung (82) bewegbar und/oder verschwenkbar auf dem Träger (80) angeordnet ist.

11. Prüfvorrichtung (12) nach einem der Ansprüche 5 bis 10, **dadurch gekennzeichnet, dass** die Lagereinrichtung (82) schwingungsentkoppelt auf dem Träger (80) gelagert ist.

12. Prüfvorrichtung (12) nach einem der Ansprüche 5 bis 11, **dadurch gekennzeichnet, dass** der Träger (80) eine Tragplatte (86) aufweist, auf der die Lagereinrichtung (82) angeordnet ist.

13. Prüfvorrichtung (12) nach einem der vorhergehenden Ansprüche, **dadurch gekennzeichnet, dass** die Basis (22) bewegbar auf einer Grundplatte (114) angeordnet ist, wobei die Grundplatte (114) vorzugsweise wenigstens eine Führungsschiene (116) zum Führen der Basis aufweist.

14. Prüfvorrichtung (12) nach einem der vorhergehenden Ansprüche, wobei die Grundplatte (114) bewegbar auf einer Bodenplatte angeordnet ist, wobei die Bodenplatte vorzugsweise wenigstens eine Führungsschiene (116) zum Führen der Grundplatte (114) aufweist.

15. Prüfvorrichtung (12) nach einem der Ansprüche 13 oder 14, **dadurch gekennzeichnet, dass** die Prüfvorrichtung (12) wenigstens eine Antriebseinrichtung aufweist, um die Basis (22) auf der Grundplatte (114) und/oder die Grundplatte (114) auf der Bodenplatte zu bewegen.

16. Prüfvorrichtung (12) nach einem der vorhergehenden Ansprüche, **dadurch gekennzeichnet, dass** die Lasteinrichtung eine Welle (26) aufweist, die mit der Adaptervorrichtung (18) verbunden ist, wobei die Adaptervorrichtung (18) formschlüssig mit der Welle (26) verbunden ist.

17. Prüfvorrichtung (12) nach einem der vorhergehenden Ansprüche, **dadurch gekennzeichnet, dass** die Adaptervorrichtung (18) ein erstes Adapterelement, das mit der Adaptervorrichtung (18) verbunden ist, und ein zweites Adapterelement, das mit der Radnabe eines Kraftfahrzeugs verbindbar ist, aufweist, wobei die beiden Adapterelemente zum Ankoppeln der Radnabe an die Lasteinrichtung (16) miteinander verbindbar sind.

18. Prüfstand (10) für ein Kraftfahrzeug mit wenigstens einer Prüfvorrichtung (12) nach einem der Ansprüche 1 bis 17.

19. Prüfstand (10) für ein Kraftfahrzeug mit wenigstens zwei Prüfvorrichtungen (12) nach einem der Ansprüche 1 bis 17, wobei die beiden Prüfvorrichtungen (12) in entgegengesetzte Richtungen, insbesondere unabhängig voneinander, auf dem Prüfstand (10) bewegbar sind.

20. Prüfstand (10) nach Anspruch 18 oder 19 mit einer Zuführvorrichtung (14) zum Überführen eines Kraftfahrzeugs in eine Position, in der eine Radnabe des Kraftfahrzeugs mit einer Adaptervorrichtung (18) der Prüfvorrichtung (12) verbindbar ist.

21. Prüfstand (10) nach Anspruch 20, **dadurch gekennzeichnet, dass** die Zuführvorrichtung (14) als eine verfahrbare Hebebühne ausgebildet ist.

## Claims

1. Test apparatus (12) for carrying out vehicle tests on a motor vehicle to be tested for a test stand (10) for motor vehicles, comprising
a load device (16) for applying a drive torque and/or a load torque to a wheel hub of the motor vehicle to be tested, and
an adapter apparatus (18) which, in a test position, connects the wheel hub of the motor vehicle to the load device (16), particularly with its shaft (26), and
a support apparatus (20) for the adapter apparatus (18),
**characterised in that**
the support apparatus (20) and the load device (16) comprise a common movable base (22), and
the load device (16) is an electric machine.

2. Test apparatus (12) according to claim 1, wherein a housing (24) of the load device (16) is connected to the movable base (22).

3. Test apparatus (12) according to one of the preceding claims, wherein the adapter apparatus (18) is supported via the support apparatus (20) on the movable base (22).

4. Test apparatus (12) according to one of the preceding claims,
**characterised in that** the test apparatus (12) is designed in such a way that
the adapter apparatus (18) and the load device (16) are held at a predetermined distance to each other required to couple the shaft of the load device (16) to the adapter apparatus (18) by means of the support apparatus (20).

5. Test apparatus (12) according to one of the preceding claims,
**characterised in that** the support apparatus (20) comprises a support structure (78) comprising at least one carrier (80) and a bearing device (82) disposed on the carrier (80) for supporting the adapter apparatus (18), so that the adapter apparatus (18) is always supported, taking on the test position.

6. Test apparatus (12) according to claim 5, **characterised in that** the carrier (80) is connected to the base (22).

7. Test apparatus (12) according to claim 5 or 6, **characterised in that** the bearing device (82) comprises a receiving portion and at least one bearing element (87) for supporting the adapter apparatus (18).

8. Test apparatus (12) according to one of claims 5 to 7, **characterised in that** the bearing device (82) comprises two support plates (124) spaced apart from each other, for receiving the adapter apparatus (18), which are arranged on a base plate (126).

9. Test apparatus (12) according to one of claims 5 to 7, **characterised in that** the bearing device (82) comprises a support arm (88) with a bearing eye (90) for receiving the adapter apparatus (18).

10. Test apparatus (12) according to one of claims 5 to 9, **characterised in that** the bearing device (82) is movably and/or pivotally arranged on the carrier (80).

11. Test apparatus (12) according to one of claims 5 to 10, **characterised in that** the bearing device (82) is mounted on the carrier (80) in a vibration-decoupled manner.

12. Test apparatus (12) according to one of the claims 5 to 11, **characterised in that** the carrier (80) comprises a support plate (86) on which the bearing device (82) is arranged.

13. Test apparatus (12) according to one of the preceding claims, **characterised in that** the base (22) is movably arranged on a base plate (114), wherein the base plate (114) preferably comprises at least one guide rail (116) for guiding the base.

14. Test apparatus (12) according to one of the preceding claims, wherein the base plate (114) is movably arranged on a bottom plate, the base plate preferably comprising at least one guide rail (116) for guiding the base plate (114).

15. Test apparatus (12) according to one of claims 13 or 14, **characterised in that** the test apparatus (12) comprises at least one drive means for driving the base (22) on the base plate (114) and/or the base plate (114) on the bottom plate.

16. Test apparatus (12) according to one of the preceding claims, **characterised in that** the load device comprises a shaft (26) which is connected to the adapter apparatus (18), wherein the adapter apparatus (18) is positively connected to the shaft (26).

17. Test apparatus (12) according to one of the preceding claims, **characterised in that** the adapter apparatus (18) comprises a first adapter element which is connected to the adapter apparatus (18), and a second adapter element connectable to the wheel hub of a motor vehicle, wherein the two adapter elements are connectable to each other for coupling the wheel hub to the load device (16).

18. Test stand (10) for a motor vehicle with at least one test apparatus (12) according to one of claims 1 to 17.

19. Test stand (10) for a motor vehicle with at least two test apparatus (12) according to one of the claims 1 to 17, wherein the two test apparatus (12) are movable in opposite directions, in particular independently of one another, on the test stand (10).

20. Test stand (10) according to claim 18 or 19 with a feeding apparatus (14) for moving a motor vehicle into a position in which a wheel hub of the motor vehicle can be connected to an adapter apparatus (18) of the test apparatus (12).

21. Test stand (10) according to claim 20, **characterised in that** the feeding apparatus (14) is designed as a movable lifting platform.

## Revendications

1. Dispositif d'essai (12) pour réaliser des essais sur un véhicule à moteur à tester pour un banc d'essai (10) pour véhicules à moteur, présentant
un système de charge (16) pour appliquer un couple d'entraînement et/ou un couple de contrainte sur un moyeu de roue du véhicule à moteur à tester, et
un dispositif adaptateur (18), qui couple, dans une position d'essai, le moyeu de roue du véhicule à moteur au système de charge (16), en particulier à l'arbre (26) de celui-ci, et
un dispositif de soutien (20) pour le dispositif adaptateur (18),
**caractérisé en ce que**
le dispositif de soutien (20) et le système de charge (16) présentent une base mobile (22) commune, et
le système de charge (16) est une machine électrique.

2. Dispositif d'essai (12) selon la revendication 1, dans lequel un boîtier (24) du système de charge (16) est relié à la base mobile (22).

3. Dispositif d'essai (12) selon l'une quelconque des revendications précédentes, dans lequel le dispositif adaptateur (18) est soutenu par l'intermédiaire du dispositif de soutien (20) sur la base mobile (22).

4. Dispositif d'essai (12) selon l'une quelconque des revendications précédentes, **caractérisé en ce que** le dispositif d'essai (12) est réalisé de manière à maintenir l'un par rapport à l'autre le dispositif adaptateur (18) et le système de charge (16) au moyen du dispositif de soutien (20) à une distance prédéfinie, qui correspond à une distance requise pour coupler l'arbre du système de charge (16) au dispositif adaptateur (18).

5. Dispositif d'essai (12) selon l'une quelconque des revendications précédentes, **caractérisé en ce que** le dispositif de soutien (20) présente une structure porteuse (78), qui présente au moins un support (80) et un système de montage (82) disposé sur le support (80) pour le montage du dispositif adaptateur (18) de sorte que le dispositif adaptateur (18) est systématiquement soutenu dans l'état de la position d'essai.

6. Dispositif d'essai (12) selon la revendication 5, **caractérisé en ce que** le support (80) est relié à la base (22) .

7. Dispositif d'essai (12) selon la revendication 5 ou 6, **caractérisé en ce que** le système de montage (82) présente une section de logement et au moins un élément de montage (87) pour le montage du dispositif adaptateur (18).

8. Dispositif d'essai (12) selon l'une quelconque des revendications 5 à 7, **caractérisé en ce que** le système de montage (82) présente deux plaques de support (124) tenues à distance l'une par rapport à l'autre pour loger le dispositif adaptateur (18), qui sont disposées sur une plaque principale (126).

9. Dispositif d'essai (12) selon l'une quelconque des revendications 5 à 7, **caractérisé en ce que** le système de montage (82) présente un bras porteur (88) avec un œillet de montage (90) pour loger le dispositif adaptateur (18).

10. Dispositif d'essai (12) selon l'une quelconque des revendications 5 à 9, **caractérisé en ce que** le système de montage (82) est disposé de manière à pouvoir être déplacé et/ou pivoté sur le support (80).

11. Dispositif d'essai (12) selon l'une quelconque des revendications 5 à 10, **caractérisé en ce que** le système de montage (82) est monté de manière découplée en oscillation sur le support (80).

12. Dispositif d'essai (12) selon l'une quelconque des revendications 5 à 11, **caractérisé en ce que** le support (80) présente une plaque porteuse (86), sur laquelle le système de montage (82) est disposé.

13. Dispositif d'essai (12) selon l'une quelconque des revendications précédentes, **caractérisé en ce que** la base (22) est disposée de manière à pouvoir être déplacée sur une plaque principale (114), dans lequel la plaque principale (114) présente de préférence au moins un rail de guidage (116) pour guider la base.

14. Dispositif d'essai (12) selon l'une quelconque des revendications précédentes, dans lequel la plaque principale (114) est disposée de manière à pouvoir être déplacée sur une plaque de fond, dans lequel la plaque de fond présente de préférence au moins un rail de guidage (116) pour guider la plaque principale (114).

15. Dispositif d'essai (12) selon l'une quelconque des revendications 13 ou 14, **caractérisé en ce que** le dispositif d'essai (12) présente au moins un système d'entraînement pour déplacer la base (22) sur la plaque principale (114) et/ou la plaque principale (114) sur la plaque de fond.

16. Dispositif d'essai (12) selon l'une quelconque des revendications précédentes, **caractérisé en ce que** le système de charge présente un arbre (26), qui est relié au dispositif adaptateur (18), dans lequel le dispositif adaptateur (18) est relié par complémentarité de forme à l'arbre (26).

17. Dispositif d'essai (12) selon l'une quelconque des revendications précédentes, **caractérisé en ce que** le dispositif adaptateur (18) présente un premier élément adaptateur, qui est relié au dispositif adaptateur (18), et un deuxième élément adaptateur, qui peut être relié au moyeu de roue d'un véhicule à moteur, dans lequel les deux éléments adaptateurs peuvent être reliés l'un à l'autre pour accoupler le moyeu de roue au système de charge (16).

18. Banc d'essai (10) pour un véhicule à moteur avec au moins un dispositif d'essai (12) selon l'une quelconque des revendications 1 à 17.

19. Banc d'essai (10) pour un véhicule à moteur avec au moins deux dispositifs d'essai (12) selon l'une quelconque des revendications 1 à 17, dans lequel les deux dispositifs d'essai (12) peuvent être déplacés dans des directions opposées, en particulier indépendamment l'un de l'autre, sur le banc d'essai (10).

20. Banc d'essai (10) selon la revendication 18 ou 19 avec un dispositif d'amenée (14) pour transférer un véhicule à moteur dans une position, dans laquelle un moyeu de roue du véhicule à moteur peut être relié à un dispositif adaptateur (18) du dispositif d'essai (12).

21. Banc d'essai (10) selon la revendication 20, **caractérisé en ce que** le dispositif d'amenée (14) est réalisé en tant qu'une plate-forme de levage pouvant être déplacée.
